# EUROPEAN PATENT APPLICATION

(11) **EP 2 256 620 A1**
(43) Date of publication of application: **01.12.2010**
(21) Application number: 09161572.4
(22) Date of filing: 29.05.2009
(51) Int. Cl.: G06F 3/14

(54) **Picture selection method for modular lighting system**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

It is disclosed a method for associating pixels of visual content displayed on a display unit with pixels of lighting modules, where each lighting module comprises a plurality of pixels, and the lighting modules are adapted to be comprised in a lighting system comprising a plurality of lighting modules and a control device, wherein the control device is adapted to communicate control signals to the lighting modules. Each of the lighting modules may communicate control signals with neighboring lighting modules, and to any of the pixels of the lighting module. Pixels of the visual content may be selected by means of a visual representation of pixels associated with the lighting modules displayed onto the display unit, wherein each pixel of the visual representation corresponds to a pixel of the lighting modules. Pixel values of the visual content may be associated with respective pixels of the visual representation on the basis of positions of pixels of the visual representation relatively to positions of pixels of the visual representation, and pixel values of the visual content. By communicating controls signals, for each pixel of the visual representation associated with a pixel value, corresponding to the pixel value to the pixel of the lighting module that corresponds to the pixel of the visual representation associated with a pixel value, a user may in principle view a result of the pixel association on the lighting modules in real-time. It is further disclosed a system adapted to perform the method.

## Description

### FIELD OF THE INVENTION

The present invention generally relates to the field of modular lighting. In particular, the present invention is related to a method for associating pixels of visual content displayed on a display unit with pixels of lighting modules.

### BACKGROUND OF THE INVENTION

Light-emitting diodes (LEDs) intended for indication purposes have been used for a long time, but high-brightness LEDs, e.g. LEDs having a brightness that is high enough to enable general illumination of various locations such as rooms, have in a short period of time caused a significant growth in the LED and lighting applications market. High brightness LEDs are generally associated with a small size, a relatively high efficacy (and associated low temperature), a relatively long lifetime, a wide color gamut and ease of control. Naturally, such LEDs are of importance to lighting designers in developing new lighting applications. Such LEDs may also be utilized in replacing conventional light generation devices, such as filamented light bulbs or halogen lamps. Such LEDs are also generally capable of emitting light of various colors, which renders it possible to control the color of the light emitted from a luminaire comprising such LEDs.

In particular, light sources extending over a relatively large area, having variable color and homogeneous light distribution, may be provided by employing arrays comprising a plurality of red, green and blue LEDs covered by a light diffuser. This makes high-brightness LEDs attractive for all kinds of applications such as, for example, illumination or decoration of shop windows and public areas like exhibitions, theatres, airports etc. The ability of LEDs to provide fast response times and the ability of LED-based RGB triplets to produce virtually any color makes LED-based RGB triples suitable for large-area lighting applications for visualizing moving color patterns or even video. Depending on LED density (i.e. pixel density) and/or controllability of the LEDs, such direct-view type lighting applications may range from single-color illumination panels to multi-color video displays.

While most conventional luminaries are intended to be permanently mounted at a certain location until the end of their lifespan, future LED lighting applications may have an increased emphasis on flexibility with regards to use and portability. Modular lighting is a step in this direction. Modular lighting refers to modules that can be assembled in order to obtain large lighting devices of various sizes and shapes. Notwithstanding the flexibility in adapting the size and shape of such modular lighting applications to the available space where the modular lighting application is to be installed, such modular lighting applications may be used to visualize moving light patterns (or video) on a screen that may have a size and a shape that in general deviates from standard rectangular liquid crystal display (LCD) devices. Substantially two-dimensional modules are sometimes referred to as tiles. Such a module may comprise various polygonal shapes, such as for example a square, triangle or pentagon shape. The modules are not limited to two-dimensional shapes but may have a three-dimensional shape, such as a cube or a pyramid. Portability may be improved by limiting the size of the individual modules.

Conventionally, modules are usually mounted on a supporting frame and interconnected electrically by means of wiring and connectors. Other conventional systems make use of a wired lighting communication protocol, such as DMX512, to establish data communication with some external light pattern generator. Modules capable of wireless interconnection are also known. In general, a modular lighting system is controlled by an external controller connected to at least one of the modules and serving as a light pattern generator for at least a portion of the lighting system.

Fields of application for such modular lighting systems may for example be digital signage and atmosphere creation. For some fields of applications, it may be expected that reconfiguration of the modular lighting systems may be required often, and by persons that are less skilled in such reconfiguration. That is, persons that are not working with such reconfiguration on a regular basis, in contrast to professional designers, installers and/or programmers working with such reconfiguration on a regular basis. Especially in such fields of application, once the physical arrangement of the lighting modules in the modular lighting system at the location at which the lighting system is to be installed has been set, the end-user generally wants to configure the modular lighting system such that the modular lighting system displays a representation of the visual content, or media, that the user currently wants to present to other people (e.g., customers). Such visual content may comprise lighting patterns, still pictures (or graphics), video, etc. For example, shop proprietors in general want to redecorate their shops (e.g. the shop windows) as quickly as possible, so as to reduce the time the shop must be closed for redecoration, for the purpose of minimizing the possible loss of profits during the time the redecoration takes place. From a time and cost perspective, such end-users in general also want to keep the intervention of professional designers, installers and programmers to a minimum, and generally prefer to do most of the reconfigurations of the modular lighting systems themselves, provided that the reconfigurations can be done in a sufficiently simple manner without the need for special skills.

Conventional modular lighting systems may be reconfigured (or reprogrammed) by mapping the desired visual content to be represented on the modular lighting system onto the pixelated lighting modules by means of dedicated proprietary editor design tools, which in general enable an experienced programmer good control over the mapping of pixels of the visual content onto pixels of the lighting modules. However, such tools are in general too difficult and cumbersome to use for an end-user.

### SUMMARY OF THE INVENTION

It is with respect to the above considerations and others that the present invention has been made. The present invention seeks to mitigate, alleviate or eliminate one or more of the above-mentioned deficiencies and disadvantages singly or in combination.

To better address one or more of these concerns, methods and devices having the features as defined in the independent claims are provided. Further advantageous embodiments of the present invention are defined in the dependent claims.

According to a first aspect of the present invention, there is provided a method for associating pixels of visual content displayed on a display unit with pixels of lighting modules, wherein each of the lighting modules comprises a plurality of pixels. The lighting modules are adapted to be comprised in a lighting system, comprising a plurality of lighting modules, each of the lighting modules comprising at least one communication unit wherein each lighting module may be adapted to communicate with at least one neighboring lighting module via one of said at least one communication unit. The lighting system may further comprise a control device adapted to communicate control signals to at least one of the lighting modules, wherein each of the lighting modules is adapted to further communicate control signals, communicated to the lighting module, to a neighboring lighting module, and wherein each communication unit may be adapted to communicate control signals to any of the pixels of the lighting module with which the respective communication unit is associated. The method may comprise receiving control signals indicative of the geometric configuration of the lighting modules. The method comprises generating visual content and displaying the visual content onto a display unit comprising a plurality of pixels. A visual representation of pixels associated with the lighting modules may be generated and displayed onto the display unit, wherein each pixel of the visual representation corresponds to a pixel of the lighting modules. Pixels of the visual representation within a boundary of the visual representation may be selected by performing at least one operation of shifting the position of the visual representation and resizing the visual representation on the display unit. The method may further comprise associating pixel values with respective pixels of the visual representation on the basis of the positions of pixels of the visual content relatively to the positions of pixels of the visual representation and pixel values of pixels of the visual content. For each pixel of the visual representation that is associated with a pixel value, control signals corresponding to the pixel value may then be communicated to the pixel of the lighting module that corresponds to the pixel of the visual representation that is associated with a pixel value.

For example, the visual representation may be displayed as a layer (which may be at least partially transparent) on top of the visual content displayed on the display unit. For example, only the contour (or boundary) of the visual representation may be displayed on the display unit, with the visual representation within the contour being at least partially transparent to an end-user, in order to facilitate shifting the position of the visual representation and/or resizing the visual representation on the display unit and subsequent selection of pixels of the visual content underlying the layer.

Such a method may provide a simple and intuitive manner in which an end-user may map, or associate, pixels of visual content displayed on a display unit that the end-user wants to represent on the modular lighting system with pixels of lighting modules. In contrast to known solutions, such a method may not require programming experience or even knowledge of dedicated editor design tools, but in principle only require knowledge of how to display visual content, such as a picture or a video, onto a display unit (e.g., a computer monitor) for example by downloading the visual content from the Internet.

By the at least one operation of shifting the position of the visual representation and resizing the visual representation on the display unit in order to select pixels of the visual content to be mapped onto the lighting modules, and communicating control signals corresponding to the pixel values of the selected pixels to corresponding pixels of the lighting module, a visual control feedback loop for the user may be enabled. By means of such a feedback loop, the association of pixels of visual content displayed on a display unit with pixels of lighting modules may be enabled to be performed in a "what you see is what you get", or plug-and-play, manner, thereby considerably simplifying, and providing flexibility to, the process of selection of the portion(s) of visual content intended to be displayed by the lighting modules compared to known solutions.

According to a second aspect of the present invention, there is provided a method for associating pixels of visual content displayed on a display unit with pixels of lighting modules, wherein each of the lighting modules comprises a plurality of pixels. The lighting modules are adapted to be comprised in a lighting system, comprising a plurality of lighting modules, each of the lighting modules comprising at least one communication unit wherein each lighting module may be adapted to communicate with at least one neighboring lighting module via one of said at least one communication unit. The lighting system may further comprise a control device adapted to communicate control signals to at least one of the lighting modules, wherein each of the lighting modules is adapted to further communicate control signals, communicated to the lighting module, to a neighboring lighting module, and wherein each communication unit may be adapted to communicate control signals to any of the pixels of the lighting module with which the respective communication unit is associated. The method may comprise receiving control signals indicative of the geometric configuration of the lighting modules from the control device. The method comprises generating a window and displaying the window onto a display unit comprising a plurality of pixels, the window displaying at least a portion of the visual content. A visual representation of pixels associated with the lighting modules may be generated and displayed onto the display unit, wherein each pixel of the visual representation corresponds to a pixel of the lighting modules. Pixels of the visual representation within a boundary of the visual representation may be selected by performing at least one operation of shifting the position of the window and resizing the window on the display unit. The method may further comprise associating pixel values with respective pixels of the visual representation on the basis of the positions of pixels of the visual content relatively to the positions of pixels of the visual representation and pixel values of pixels of the visual content. For each pixel of the visual representation that is associated with a pixel value, control signals corresponding to the pixel value may then be communicated to the pixel of the lighting module that corresponds to the pixel of the visual representation that is associated with a pixel value.

The display unit may be communicatively connected with a central processing unit of a computer, the central processing unit being adapted to run an operative system, for example an operative system of the Microsoft Windows family of operative systems, such as Windows XP, Windows 98, Windows Vista, etc. The window may thus for example be a window provided by a Microsoft Windows media application. Such a window may in general be sizeable and repositionable on the basis of user input, for example via a pointer control device (such as a mouse). Thus, a user may drag and/or resize the window on the display unit in an intuitive, straightforward and flexible manner with regards to operation.

Furthermore, by a method according to the second aspect of the present invention, identical or similar advantages to the advantages achieved by a method according to the first aspect of the present invention may be achieved, as the methods according to the first and second aspects of the present invention, respectively, provide alternative advantageous solutions for associating pixels of visual content displayed on a display unit with pixels of lighting modules.

According to a third aspect of the present invention, there is provided a system adapted to associate pixels of visual content displayed on a display unit with pixels of lighting modules, each lighting module comprising a plurality of pixels. The lighting modules are adapted to be comprised in a lighting system, comprising a plurality of lighting modules, each of the lighting modules comprising at least one communication unit wherein each lighting module may be adapted to communicate with at least one neighboring lighting module via one of said at least one communication unit. The lighting system may further comprise a control device adapted to communicate control signals to at least one of the lighting modules, wherein each of the lighting modules is adapted to further communicate control signals, communicated to the lighting module, to a neighboring lighting module, and wherein each communication unit may be adapted to communicate control signals to any of the pixels of the lighting module with which the respective communication unit is associated. The system comprises a display unit, comprising a plurality of pixels, and a controller, communicatively connected to the display unit and to the control device, the controller being adapted to generate control signals and communicate control signals to, and receive control signals from, the display unit and said control device. The controller may be further adapted to generate and display visual content onto the display unit, and to generate and display a visual representation of pixels associated with the lighting modules onto the display unit, wherein each pixel of the visual representation corresponds to a pixel of the lighting modules. The controller may be further adapted to, on the basis of user input comprising at least one operation of shifting the position of the visual representation and resizing the visual representation on the display unit, select pixels of the visual content arranged within a boundary of the visual representation. The controller may be further adapted to associate pixel values with respective pixels of the visual representation on the basis of the positions of pixels of the visual content relatively to the positions of pixels of the visual representation and pixel values of pixels of the visual content. For each pixel of said visual representation associated with a pixel value, the controller may be further adapted to communicate control signals corresponding to the pixel value to the pixel of the lighting module that corresponds to the pixel of the visual representation associated with a pixel value. The system may thus be adapted to perform a method according to the first aspect of the present invention.

According to a fourth aspect of the present invention, there is provided a system adapted to associate pixels of visual content displayed on a display unit with pixels of lighting modules, each comprising a plurality of pixels. The lighting modules are adapted to be comprised in a lighting system, comprising a plurality of lighting modules, each of the lighting modules comprising at least one communication unit wherein each lighting module may be adapted to communicate with at least one neighboring lighting module via one of said at least one communication unit. The lighting system may further comprise a control device adapted to communicate control signals to at least one of the lighting modules, wherein each of the lighting modules is adapted to further communicate control signals, communicated to the lighting module, to a neighboring lighting module, and wherein each communication unit may be adapted to communicate control signals to any of the pixels of the lighting module with which the respective communication unit is associated. The system comprises a display unit, comprising a plurality of pixels, and a controller, communicatively connected to the display unit and to the control device, the controller being adapted to generate control signals and communicate control signals to, and receive control signals from, said display unit and said control device. The controller may be further adapted to generate and display a window, adapted such that the window displays at least a portion of the visual content, onto the display unit, and to generate and display a visual representation of pixels associated with the lighting modules onto the display unit, wherein each pixel of the visual representation corresponds to a pixel of the lighting modules. The controller may be further adapted to, on the basis of user input comprising at least one operation of shifting the position of the window and resizing the window on the display unit, select pixels of the visual content arranged within a boundary of the visual representation. The controller may be further adapted to associate pixel values with respective pixels of the visual representation on the basis of the positions of pixels of the visual content relatively to the positions of pixels of the visual representation and pixel values of pixels of the visual content. For each pixel of said visual representation associated with a pixel value, the controller may be further adapted to communicate control signals corresponding to the pixel value to the pixel of the lighting module that corresponds to the pixel of the visual representation associated with a pixel value. The system may thus be adapted to perform a method according to the second aspect of the present invention.

Furthermore, by a system according to the fourth aspect of the present invention, identical or similar advantages to the advantages achieved by a system according to the third aspect of the present invention may be achieved, as the systems according to the third and fourth aspects of the present invention, respectively, provide alternative advantageous solutions for associating pixels of visual content displayed on a display unit with pixels of lighting modules.

The communication between lighting modules in the lighting system, or the communication between the control device and a lighting module, may be performed in a wireless or wired fashion.

According to an exemplifying embodiment of the present invention, the generating and displaying of the visual content onto the display unit may comprise retrieving the visual content from a data source.

Such a source may comprise, or be, a remote web server, a hard drive installed in a computer or another external digital storage medium, such as a DVD or CD, a flash memory, a read-only-memory, etc., or the like. This provides an easy and straightforward way to generate the visual content and flexibility in the choice of visual content.

According to another exemplifying embodiment of the present invention, the visual representation may represent a lighting system having a predetermined shape and a predetermined maximum size. By "size" of the lighting system it may be referred to the number of lighting modules comprised in the lighting system, and/or the size of the region comprised within the boundary of the lighting system.

In other words, the visual representation may represent a lighting system comprising a larger number of lighting modules (e.g. the maximum number of lighting modules possible) than the number of lighting modules in the actual lighting system. In principle, the controller may in such a case generate control signals for the pixels of every lighting module in the visual representation of the lighting system of the predetermined shape and a predetermined maximum size. Such a configuration may generally enable adapting to situations where on-the-fly changes of the lighting system occur, e.g. situations where lighting modules are added to or removed from the lighting system or replaced during operation of the lighting system, by enabling communication of control signals for each of the pixels of the visual representation associated with a pixel value to all of the lighting modules of the maximally sized lighting system.

According to another exemplifying embodiment of the present invention, information indicative of changes in the geometric configuration of the lighting modules of the lighting system may be received from the control device. On the basis of the information, the visual representation may be regenerated, and the regenerated visual representation may then be displayed onto the display unit. The regenerated visual representation may thus replace the currently displayed visual representation.

In other words, the lighting modules may be adapted to communicate data to the control unit, by means of which data the lighting modules may for example return information indicative of changes in the geometric configuration in the lighting system, for instance information indicative of a removed lighting module (which may be indicated by the absence of the address of that particular lighting module in data communicated from the lighting modules to the controller). On the basis the received information, the visual representation displayed on the display unit may then be updated.

In this manner, during a process of mapping, or associating, pixels of visual content displayed on a display unit with pixels of lighting modules, the controller may adapt the lighting module configuration represented on the display unit by the visual representation in principle real-time, thereby enabling the user to instantaneously adapt the selected area of pixels of the visual content arranged within a boundary of the visual representation to changes in the lighting module system, caused by, e.g., adding, removing or replacing lighting modules. Thus, such a configuration may enable adapting to situations where on-the-fly changes of the lighting system occur, e.g. situations where lighting modules are added to or removed from the lighting system or replaced during operation of the lighting system.

According to another exemplifying embodiment of the present invention, the association of pixel values with respective pixels of the visual representation may comprise interpolating between pixel values of pixels of the visual content.

As the selected portion of the visual content in general may have a higher pixel density than the pixel density of the corresponding lighting module(s), pixel sub-sampling in general has to applied, providing as many pixel values as there are pixels (e.g. LEDs) in the corresponding lighting module(s). Depending on the pixel density of the lighting modules, it may happen that at the precise spatial locations of the lighting module pixels there are no corresponding pixels of the visual content present, and thus no pixel values of pixels of the visual content available. In such a case, the configuration according to the embodiment described immediately in the foregoing may enable calculating proper pixel values on the basis of pixel values of pixels of the visual content in the vicinity of the respective lighting module pixel in a manner that is flexible and adaptive with regards to end-user requirements and/or capacity requirements. For example, depending on end-user requirements and/or capacity requirements, interpolation may be performed for pixel values of pixels of visual content using up to nearest neighbors of visual content pixels, up to next nearest neighbors of visual content pixels, etc., from the respective lighting module pixel. Interpolation may be performed using any suitable interpolation technique, such as linear interpolation, cubic splines, etc.

Interpolation between pixel values of pixels of the visual content may also be applied in case an underlying grid for effectuating the resizing the window/visual representation and/or shifting the position of the window/visual representation on the display unit has a finer resolution (e.g. a higher grid point density) compared to the resolution (e.g. the pixel density) of the visual content.

According to an exemplifying embodiment of the present invention, the visual representation may be displayed such that a portion of the visual content overlapped by a portion of the visual representation is at least partly visible to a user.

According to another exemplifying embodiment of the present invention, the window may be displayed such that a portion of the window overlapped by a portion of the visual representation is at least partly visible to a user.

Configurations in accordance with the two embodiments described immediately in the foregoing may facilitate the selection of pixels of the visual content arranged within a boundary of the visual representation by a user, as such configurations can enable increasing the visibility of the visual content within the boundary of the visual representation to the user. For example, the visual representation may be displayed such that the outline of the visual representation is visible to the user, with the region within (or bounded by) the outline being transparent or at least semi-transparent to the user, or the window may be displayed such that the outline of the visual representation is visible to the user, with the region within (or bounded by) the outline being transparent or at least semi-transparent to the user.

According to another exemplifying embodiment of the present invention, the selection of pixels of visual content within a boundary of the visual representation may be effectuated by performing at least one operation of shifting the position of the visual representation and resizing the visual representation and/or at least one operation of shifting the position of a window and resizing the window. The window may be a window such as been described in the foregoing with reference to exemplifying embodiments of the present invention. In this manner, an increased flexibility with regards to operation and/or convenience in mapping may be achieved.

Further objects and advantages of the present invention will be described below by means of exemplifying embodiments.

The steps of any method disclosed herein do not have to be performed in the exact order disclosed, unless explicitly stated.

It is noted that the invention relates to all possible combinations of features recited in the claims.

### BRIEF DESCRIPTION OF THE DRAWINGS

Exemplifying embodiments of the invention will be described below with reference to the accompanying drawings, in which:
Fig. 1 is a schematic block diagram of a system according to an exemplifying embodiment of the present invention;
Fig. 2a is a schematic view of a lighting system illustrating an exemplifying embodiment of the present invention;
Fig. 2b is a schematic view of a lighting module illustrating an exemplifying embodiment of the present invention;
Fig. 3 is a schematic view illustrating an exemplifying embodiment of the present invention;
Fig. 4 is a schematic view illustrating another exemplifying embodiment of the present invention;
Fig. 5 is a schematic view illustrating computer readable storage mediums according to exemplifying embodiments of the present invention;
Fig. 6 is a schematic flow diagram illustrating a method according to an exemplifying embodiment of the present invention; and
Fig. 7 is a schematic flow diagram illustrating a method according to an exemplifying embodiment of the present invention.

In the accompanying drawings, the same reference numerals denote the same or similar elements throughout the views.

### DETAILED DESCRIPTION

The present invention will now be described more fully hereinafter with reference to the accompanying drawings, in which exemplifying embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Furthermore, like numbers refer to like or similar elements throughout.

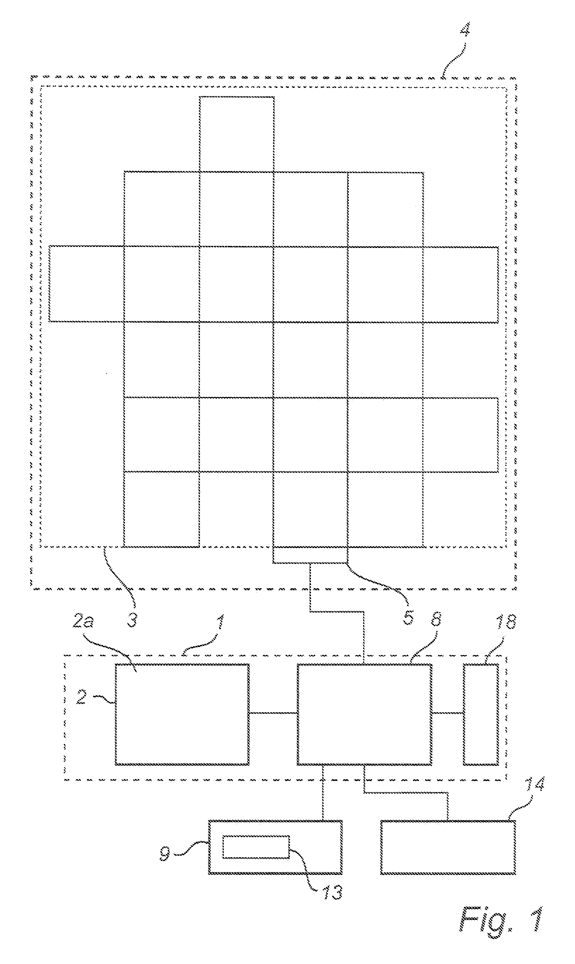

Referring to Fig. 1, there is shown a schematic block diagram of a system 1 according to an exemplifying embodiment of the present invention, which system 1 is adapted to associate pixels of visual content displayed on a display unit 2 with pixels of lighting modules, generally referenced by the numeral 3, comprised in a lighting system 4, such as a modular lighting system. The lighting system 4 further comprises a control device 5 adapted to communicate control signals to the lighting modules 3.

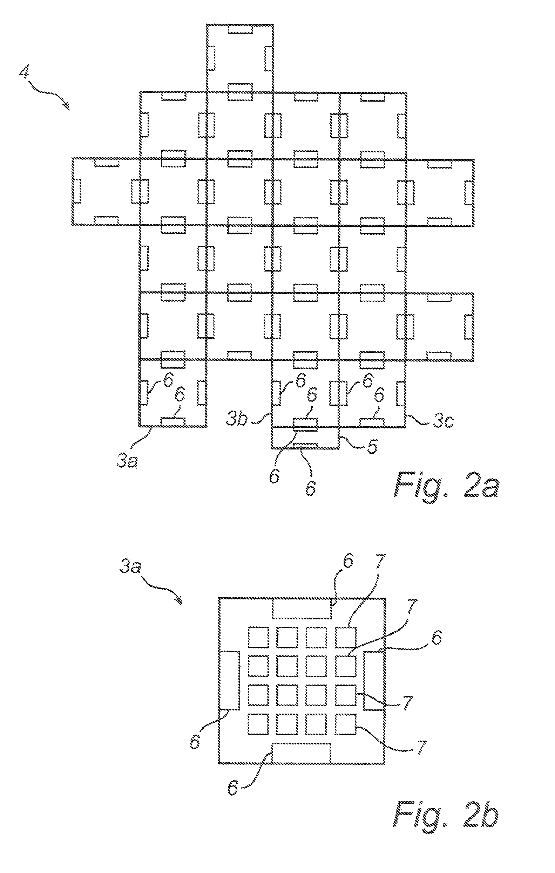

Referring now to Fig. 2a, there is shown a schematic view of a lighting system 4 according to an exemplifying embodiment of the present invention. The lighting system 4 may comprise a plurality of lighting modules 3a, 3b, 3c, ... (of which only a few are referenced by numerals in Fig. 2). Each of the lighting modules 3a, 3b, 3c, ... of the lighting system 4 comprises at least one communication unit 6 (of which only a few are referenced by numerals in Fig. 2), via which at least one communication unit 6 the lighting module may be adapted to communicate controls signals with neighboring lighting modules or with another element, in particular with a control device 5. The control device 5 may for this purpose comprise one or more communication units 6. The communication between neighboring lighting modules 3a, 3b, 3c, ... in the lighting system 4, or the communication between a lighting module 3a, 3b, 3c, ... and the control device 5, may be performed in a wireless or wired fashion.

According to the exemplifying embodiment depicted in Fig. 2a, the lighting modules 3a, 3b, 3c, ... of the lighting system 4 are arranged in an array of square-shaped lighting modules. Such an array configuration of lighting modules is shown by way of example and should not be construed as limiting the present invention, which rather encompasses embodiments comprising lighting systems comprising any number of lighting modules, having an arbitrary geometrical shape, e.g. a polygonal shape, which lighting modules may be arbitrarily arranged in relation to each other, not limited to an array of square lighting modules such as exemplary depicted in Fig. 2a. With further reference to Fig. 2a, each of the lighting modules 3a, 3b, 3c, ... comprises four communication units 6. However, the number of communication units 6 of each lighting module 3a, 3b, 3c, ... is arbitrary and may be adapted to user requirements and/or lighting requirements (e.g. resolution of the lighting system 4). For example, in a lighting system comprising a plurality of triangle-shaped lighting modules (not shown), the number of communication units of each lighting module may for example be three.

Referring now to Fig. 2b, there is shown an exemplifying schematic view of a lighting module 3a. The lighting module 3a comprises a number of communication units 6, such as have been described in the foregoing with reference to Fig. 2a. The lighting module further comprises a plurality of pixels 7, each of which may comprise a light-emitting element such as a LED unit, e.g. a LED having a particular color, a LED RGB triplet unit comprising a red, a blue and a green LED, etc. According to the exemplifying configuration depicted in Fig. 2, the pixels 7 of the lighting module 3a may for example be arranged in an array of 4 x 4 pixels 7. Each communication unit 6 of the lighting module 3a may be adapted to communicate control signals received by the communication unit 6 to any of the pixels 7 of the lighting module 3a, or vice versa.

Each lighting module of the lighting modules 3 may further comprise various electronic components, such as data handler and control modules, processor chips, timing modules, power supplies, etc. As important as such electronic components may be, they are not critical to the implementation of the present invention as such, and detailed description of such electronic components is therefore omitted.

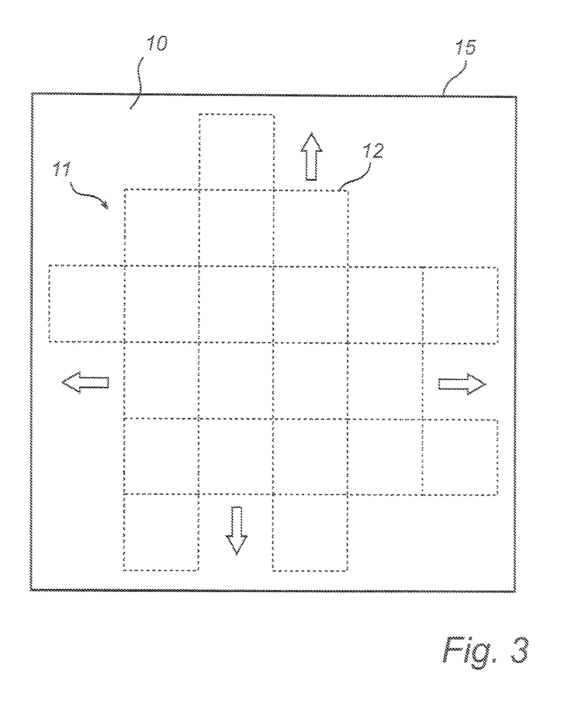

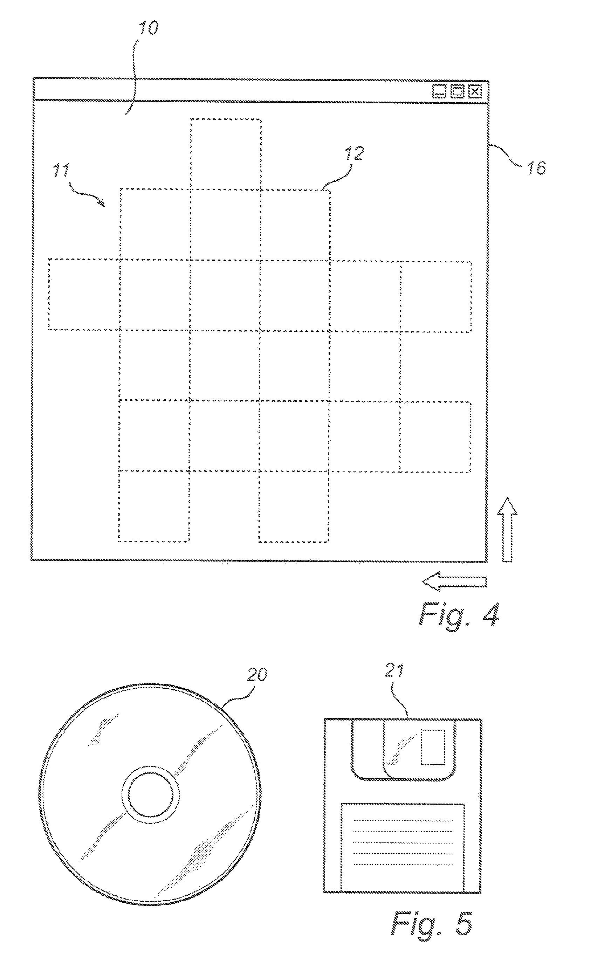

Referring now again to Fig. 1, the system 1 comprises a display unit 2, for example comprising a computer monitor, including a plurality of pixels indicated by the reference numeral 2a. The display unit 2 may be adapted to display visual content, for example still pictures (e.g. graphics), video, etc., viewable to, e.g., a user. The system 1 further comprises a controller 8 that may be communicatively connected to the display unit 2. The controller 8 may be adapted to generate control signals, and communicate control signals to, and receive control signals from, the display unit 2. The controller 8 may be further adapted to receive control signals from the control device 5 and/or communicate control signals to the control device 5. The control device 5 may thus act as a relay for control signals from the lighting modules 3 to the controller 8 and/or control signals from the controller 8 to the lighting modules 3. Alternatively or optionally, the control device 5 itself may be adapted to generate control signals, e.g. on the basis of input from the controller 8. As schematically depicted in Fig. 1, the controller 8 may be connected to a power unit 14 adapted to supply power to the controller 8 and/or supply power via the controller 8 to the lighting system 4, the display unit 2, other components of the system 1 and/or components connected to the controller 8. The controller 8 may further be connected to a processing unit 9 comprising a data source 13, such as a hard drive, a memory unit, a flash memory, etc., from which data source 13 visual content may be retrieved. Once retrieved from the data source 13, the visual content may be displayed onto the display unit 2. Alternatively or optionally, the processing unit 9 may be adapted to generate visual content, for example by connecting to the Internet and downloading suitable publicly available visual content from web pages. The processing unit 9 may be integrated in the controller 8. The system 1 may further comprise an interpolation unit 18, which is further described in the following with reference to Figs. 3 and 4. Alternatively, the interpolation unit 18 may be incorporated in the controller 8. Alternatively or optionally, the controller 8 may be adapted to perform the functions of the interpolation unit 18, some of which functions are described in the following, whereby a separate interpolation unit 18 may not be required.

Referring now to Fig. 3, there is shown a schematic view of a portion 15 of the display unit 2, viewable by a user, onto which portion 15 visual content 10 may be displayed. The visual content 10 may be generated by the controller 8 (see Fig. 1). Furthermore, the controller 8 may be adapted to generate and display a visual representation 11 of pixels associated with the lighting modules 3 of the lighting system 4 onto the display unit 2, wherein each pixel of the visual representation 11 corresponds to a pixel of the lighting modules 3. For example, according to the embodiment described with reference to Fig. 3, the controller 8 may be adapted to insert a (downsized) visual representation 11 of the lighting system 4 as a layer on top of the visual content displayed on the display unit. In this manner, with reference to Fig. 2b, each pixel 7 (not shown in Fig. 3) of the visual representation 11 I may be adapted to correspond to a pixel 7 of the lighting modules 3.

With further reference to Fig. 3, the user may, by means of user input, for example via a pointer control device such as a mouse or the like (not shown), modify the position and/or size of the visual representation 11 as displayed on top of the visual content 10. Such user input may for example comprise at least one operation of shifting the position of the visual representation 11, indicated by the arrows in Fig. 3, and resizing the visual representation 11 on the display unit 2. On the basis of such user input, the controller 8 may be adapted to select pixels of the visual content 10 arranged within the boundary 12 of the visual representation 11 as displayed onto the display unit 2. In this manner, only the pixels of the visual content 10 within the boundary 12 of the visual representation 11 may be assigned to pixels of the lighting modules 3 corresponding to the respective pixels of the visual representation 11.

Alternatively, the controller 8 may be adapted to generate and display a window 16 configured such that the window 16 displays at least a portion of the visual content 10. This exemplifying configuration is schematically illustrated in Fig. 4. In this exemplifying case, the display unit 2 may be communicatively connected with a processing unit 9 of a computer (not shown), the processing unit 9 being adapted to run an operative system, for example an operative system of the Microsoft Windows family of operative systems, such as Windows XP, Windows 98, Windows Vista, etc. The window 16 may thus for example be a window provided by a Microsoft Windows media application. Such a window 16 is in general sizeable and repositionable on the basis of user input, for example via a pointer control device (not shown), such as a mouse. Thus, a user may drag (i.e. reposition) and/or resize the window 16 on the display unit 2. Such user input may thus comprise at least one operation of shifting the position of the window 16, and resizing the window 16, indicated by the arrows in Fig. 4, on the display unit 2. Thus, according to the embodiment of the present invention, the visual representation 11 may be fixed on the display unit 2 while the visual content 10 within the window 16 is resized and/or repositioned. On the basis of the user input, the controller 8 may be adapted to select pixels of the visual content 10 in the window 16 arranged within the boundary 12 of the visual representation 11 as displayed onto the display unit 2. In this manner, only the pixels of the visual content 10 within the boundary 12 of the visual representation 11 may be assigned to pixels of the lighting modules 3 corresponding to the respective pixels of the visual representation 11.

With reference to Fig. 1 and Fig. 3 or 4, the controller 8 may be adapted so as to subsequently associate pixel values of the visual content 10 with respective pixels of the visual representation 11 on the basis of the positions of pixels of the visual content 10 relatively to the positions of pixels of the visual representation 11, and also on the basis of pixel values of the visual content 10. The positions of pixels of the visual content 10, the positions of pixels of the visual representation 11 and pixel values of the visual content 10 may for this purpose be communicated from the display unit 2 to the controller 8 for further processing therein. For each pixel of the visual representation that is associated with a pixel value, the controller 8 may be further adapted to communicate control signals that correspond to the pixel value to the pixel of the lighting module of the lighting modules 3 that corresponds to the pixel of the visual representation 11 that is associated with a pixel value.

The association of pixel values with respective pixels of the visual representation 11 may comprise interpolating between pixel values of pixels of the visual content 10. The system 1 may comprise an interpolation unit 18 adapted for this purpose. As the selected portion of the visual content 10 in general may have a higher pixel density than the pixel density of the corresponding lighting module(s) 3, pixel sub-sampling in general has to applied, providing as many pixel values as there are pixels 7 in the corresponding lighting module(s) 3. Depending on the pixel density of the lighting modules, it may happen that at the precise spatial locations of the lighting module pixels 7 there are no corresponding pixels of the visual content 10 present, and thus no pixel values of pixels of the visual content 10 available. In such a case, the interpolation unit 18 may enable calculating proper pixel values on the basis of pixel values of pixels of the visual content 10 in the vicinity of the respective lighting module pixel 7.

As already described in the foregoing, the visual representation of lighting module pixels may refer to a lighting system being of a predetermined shape and a predetermined maximum size, e.g. comprising a predetermined maximum number of lighting modules, and not to the actual lighting system 3 (which typically may be a subset of the maximally sized lighting system). In principle, the controller 8 may in such a case generate control signals for the pixels of every lighting module in the visual representation of the maximally sized lighting system. Such a configuration generally provides adaptiveness with regards to changes in the lighting system, typically in situations where on-the-fly changes of the lighting system may occur, for example in situations where lighting modules are added to or removed from the lighting system or replaced during operation of the lighting system, by enabling communication of control signals for each of the pixels of the visual representation associated with a pixel value to all of the lighting modules of the maximally sized lighting system.

Referring now to Fig. 5, there is shown a schematic view of computer readable digital storage mediums 20, 21 according to exemplifying embodiments of the present invention, comprising a DVD 20 and a floppy disk 21 on each of which there may be stored a computer program comprising computer code adapted to, when executed in a processor unit, perform a method according to the present invention or embodiments thereof, as has been described in the foregoing.

Although only two different types of computer-readable digital storage mediums have been described above with reference to Fig. 5, the present invention encompasses embodiments employing any other suitable type of computer-readable storage medium, such as, but not limited to, a hard disk drive, a CD, a flash memory, magnetic tape, a USB stick, a Zip drive, etc.

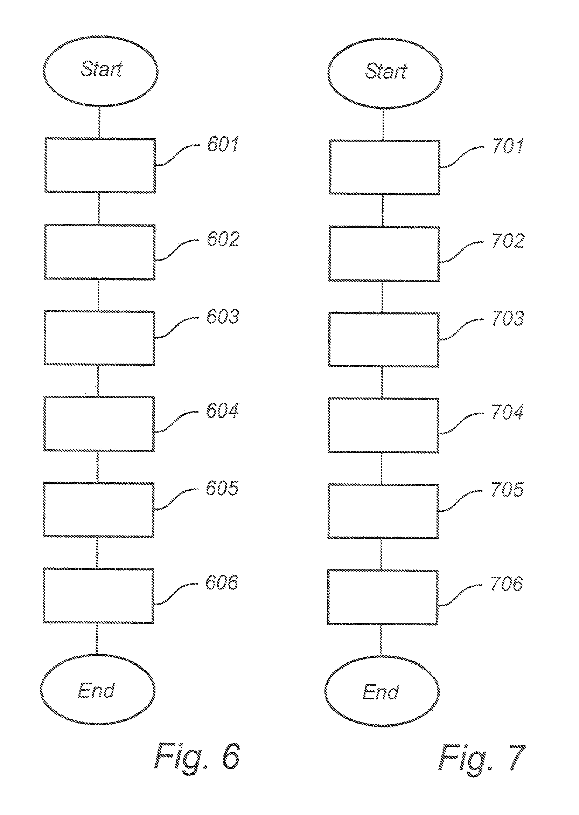

Referring now to Fig. 6, there is shown a schematic flow diagram illustrating a method according to an exemplifying embodiment of the present invention for associating pixels of visual content, displayed on a display unit, with pixels of lighting modules. The lighting modules are adapted to be comprised in a lighting system such as has been discussed in the foregoing with reference to exemplifying embodiments. After the start of the method, at step 601, control signals indicative of the geometric configuration of the lighting modules may be received. At step 602, visual content may be generated and displayed onto the display unit, comprising a plurality of pixels. At step 603, a visual representation of pixels associated with the lighting modules may be generated and displayed onto the display unit, where each pixel of the visual representation corresponds to a pixel of the lighting modules. At step 604, pixels of the visual content arranged within a boundary of the visual representation may be selected by performing at least one operation of shifting the position of the visual representation and resizing the visual representation on the display unit. At step 605, pixel values may be associated with respective pixels of the visual representation on the basis of the positions of pixels of the visual content relatively to the positions of pixels of the visual representation and pixel values of pixels of the visual content. At step 606, for each pixel of the visual representation associated with a pixel value, control signals corresponding to the pixel value may be communicated to the pixel of the lighting module that corresponds to the pixel of the visual representation associated with a pixel value.

Referring now to Fig. 7, there is shown a schematic flow diagram illustrating a method according to an exemplifying embodiment of the present invention for associating pixels of visual content, displayed on a display unit, with pixels of lighting modules. The lighting modules are adapted to be comprised in a lighting system such as has been discussed in the foregoing with reference to exemplifying embodiments. After the start of the method, at step 701, control signals indicative of the geometric configuration of the lighting modules may be received. At step 702, a window may be generated and displayed onto the display unit, comprising a plurality of pixels, the window displaying at least a portion of the visual content. At step 703, a visual representation of pixels associated with the lighting modules may be generated and displayed onto the display unit, where each pixel of the visual representation corresponds to a pixel of the lighting modules. At step 704, pixels of the visual content arranged within a boundary of the visual representation may be selected by performing at least one operation of shifting the position of the window and resizing the window on the display unit. At step 705, pixel values may be associated with respective pixels of the visual representation on the basis of the positions of pixels of the visual content relatively to the positions of pixels of the visual representation and pixel values of pixels of the visual content. At step 706, for each pixel of the visual representation associated with a pixel value, control signals corresponding to the pixel value may be communicated to the pixel of the lighting module that corresponds to the pixel of the visual representation associated with a pixel value.

In conclusion, it is disclosed a method for associating pixels of visual content displayed on a display unit with pixels of lighting modules, where each lighting module comprises a plurality of pixels, and the lighting modules are adapted to be comprised in a lighting system comprising a plurality of lighting modules and a control device, wherein the control device is adapted to communicate control signals to the lighting modules. Each of the lighting modules may communicate control signals with neighboring lighting modules, and to any of the pixels of the lighting module. Pixels of the visual content may be selected by means of a visual representation of pixels associated with the lighting modules displayed onto the display unit, wherein each pixel of the visual representation corresponds to a pixel of the lighting modules. Pixel values of the visual content may be associated with respective pixels of the visual representation on the basis of positions of pixels of the visual representation relatively to positions of pixels of the visual representation, and pixel values of the visual content. By communicating controls signals, for each pixel of the visual representation associated with a pixel value, corresponding to the pixel value to the pixel of the lighting module that corresponds to the pixel of the visual representation associated with a pixel value, a user may in principle view a result of the pixel association on the lighting modules in real-time.

Although exemplary embodiments of the present invention has been described herein, it should be apparent to those having ordinary skill in the art that a number of changes, modifications or alterations to the invention as described herein may be made. Thus, the above description of the invention and the accompanying drawings are to be regarded as non-limiting examples of the invention and the scope of protection is defined by the appended claims. Any reference signs in the claims should not be construed as limiting the scope.

## Claims

1. A method for associating pixels of visual content (10), displayed on a display unit (2), with pixels of lighting modules, each of said lighting modules comprising a plurality of pixels (7), wherein said lighting modules are adapted to be comprised in a lighting system (4) comprising a plurality of lighting modules (3), each of said lighting modules comprising at least one communication unit wherein each lighting module is adapted to communicate with at least one neighboring lighting module via one of said at least one communication unit, said lighting system further comprising a control device (5) adapted to communicate control signals to at least one of said lighting modules, wherein each of the lighting modules is adapted to further communicate control signals, communicated to said lighting module, to a neighboring lighting module, wherein each communication unit is adapted to communicate control signals to any of the pixels of the lighting module with which said communication unit is associated, the method comprising:
- receiving (601) control signals indicative of the geometric configuration of said lighting modules;
- generating and displaying (602) said visual content onto the display unit (2) comprising a plurality of pixels;
- generating and displaying (603) a visual representation (11) of pixels associated with said lighting modules onto said display unit, each pixel of said visual representation corresponding to a pixel of said lighting modules;
- selecting (604) pixels of said visual content arranged within a boundary (12) of said visual representation by performing at least one operation of shifting the position of said visual representation and resizing said visual representation on said display unit;
- associating (605) pixel values with respective pixels of said visual representation on the basis of the positions of pixels of said visual content relatively to the positions of pixels of said visual representation and pixel values of pixels of said visual content; and
- for each pixel of said visual representation associated with a pixel value, communicating (606) control signals corresponding to said pixel value to the pixel of the lighting module that corresponds to said pixel of said visual representation associated with a pixel value.

2. The method according to claim 1, wherein the generating and displaying of said visual content onto said display unit comprises retrieving said visual content from a data source (13).

3. The method according to claim 1, wherein said visual representation represents a lighting system being of a predetermined shape and a predetermined maximum size.

4. The method according to claim 1, further comprising receiving information indicative of changes in the geometric configuration of the lighting modules of said lighting system from said control device, and, on the basis of said information, regenerating said visual representation and displaying said regenerated visual representation onto said display unit.

5. A method for associating pixels of visual content (10), displayed on a display unit (2), with pixels of lighting modules, each of said lighting modules comprising a plurality of pixels (7), wherein said lighting modules are adapted to be comprised in a lighting system (4) comprising a plurality of lighting modules (3), each of said lighting modules comprising at least one communication unit wherein each lighting module is adapted to communicate with at least one neighboring lighting module via one of said at least one communication unit, said lighting system further comprising a control device (5) adapted to communicate control signals to at least one of said lighting modules, wherein each of the lighting modules is adapted to further communicate control signals, communicated to said lighting module, to a neighboring lighting module, wherein each communication unit is adapted to communicate control signals to any of the pixels of the lighting module with which said communication unit is associated, the method comprising:
- receiving (701) control signals indicative of the geometric configuration of said lighting modules;
- generating and displaying (702) a window (16), displaying at least a portion of said visual content, onto the display unit comprising a plurality of pixels;
- generating and displaying (703) a visual representation (11) of pixels associated with said lighting modules onto said display unit, each pixel of said visual representation corresponding to a pixel of said lighting modules;
- selecting (704) pixels of said visual content arranged within a boundary (12) of said visual representation by performing at least one operation of shifting the position of said window and resizing said window on said display unit;
- associating (705) pixel values with respective pixels of said visual representation on the basis of the positions of pixels of said visual content relatively to the positions of pixels of said visual representation and pixel values of pixels of said visual content; and
- for each pixel of said visual representation associated with a pixel value, communicating (706) control signals corresponding to said pixel value to the pixel of the lighting module that corresponds to said pixel of said visual representation associated with a pixel value.

6. The method according to claim 5, wherein the generating and displaying of the window onto said display unit comprises retrieving said visual content from a data source (13).

7. The method according to claim 5, wherein said visual representation represents a lighting system being of a predetermined shape and a predetermined maximum size.

8. The method according to claim 5, further comprising receiving information indicative of changes in the geometric configuration of the lighting modules of said lighting system from said control device, and, on the basis of said information, regenerating said visual representation and displaying said regenerated visual representation onto said display unit.

9. A method according to claim 1 or 5, wherein the association of pixel values with respective pixels of said visual representation comprises interpolating between pixel values of pixels of said visual content.

10. A system (1) for associating pixels of visual content (10), displayed on a display unit (2), with pixels of lighting modules, each of said lighting modules comprising a plurality of pixels (7), wherein said lighting modules are adapted to be comprised in a lighting system (4) comprising a plurality of lighting modules (3), each of said lighting modules comprising at least one communication unit wherein each lighting module is adapted to communicate with at least one neighboring lighting module via one of said at least one communication unit, said lighting system further comprising a control device (5) adapted to communicate control signals to at least one of said lighting modules, wherein each of the lighting modules is adapted to further communicate control signals, communicated to said lighting module, to a neighboring lighting module, wherein each communication unit is adapted to communicate control signals to any of the pixels of the lighting module with which said communication unit is associated, the system comprising:
a display unit (2) comprising a plurality of pixels;
a controller (8) communicatively connected to said display unit and to said control device, wherein said controller is adapted to generate control signals and communicate control signals to, and receive control signals from, said display unit and said control device;
wherein said controller is adapted to generate and display visual content (10) onto said display unit, and to generate and display a visual representation (11) of pixels associated with said lighting modules onto said display unit, each pixel of said visual representation corresponding to a pixel of said lighting modules;
wherein said controller is further adapted to, on the basis of user input comprising at least one operation of shifting the position of said visual representation and resizing said visual representation on said display unit, select pixels of said visual content arranged within a boundary (12) of said visual representation; and
wherein said controller is further adapted to associate pixel values with respective pixels of said visual representation on the basis of the positions of pixels of said visual content relatively to the positions of pixels of said visual representation and pixel values of pixels of said visual content, and, for each pixel of said visual representation associated with a pixel value, communicate control signals corresponding to said pixel value to the pixel of the lighting module that corresponds to said pixel of said visual representation associated with a pixel value.

11. The system according to claim 10, wherein said controller is further adapted to display said visual representation such that a portion of said visual content overlapped by a portion of said visual representation is at least partly visible to a user.

12. A system (1) for associating pixels of visual content (10), displayed on a display unit (2), with pixels of lighting modules, each of said lighting modules comprising a plurality of pixels (7), wherein said lighting modules are adapted to be comprised in a lighting system (4) comprising a plurality of lighting modules (3), each of said lighting modules comprising at least one communication unit wherein each lighting module is adapted to communicate with at least one neighboring lighting module via one of said at least one communication unit, said lighting system further comprising a control device (5) adapted to communicate control signals to at least one of said lighting modules, wherein each of the lighting modules is adapted to further communicate control signals, communicated to said lighting module, to a neighboring lighting module, wherein each communication unit is adapted to communicate control signals to any of the pixels of the lighting module with which said communication unit is associated, the system comprising:
a display unit (2) comprising a plurality of pixels;
a controller (8) communicatively connected to said display unit and to said control device, wherein said controller is adapted to generate control signals and communicate control signals to, and receive control signals from, said display unit and said control device;
wherein said controller is adapted to generate and display a window (16), adapted such that the window displays at least a portion of said visual content, onto said display unit, and to generate and display a visual representation (11) of pixels associated with said lighting modules onto said display unit, each pixel of said visual representation corresponding to a pixel of said lighting modules;
wherein said controller is further adapted to, on the basis of user input comprising at least one operation of shifting the position of said window and resizing said window on said display unit, select pixels of said visual content arranged within a boundary (12) of said visual representation; and
wherein said controller is further adapted to associate pixel values with respective pixels of said visual representation on the basis of the positions of pixels of said visual content relatively to the positions of pixels of said visual representation and pixel values of pixels of said visual content, and, for each pixel of said visual representation associated with a pixel value, communicate control signals corresponding to said pixel value to the pixel of the lighting module that corresponds to said pixel of said visual representation associated with a pixel value.

13. The system according to claim 12, wherein said controller is further adapted to display said window such that a portion of said window overlapped by a portion of said visual representation is at least partly visible to a user.

14. A system according to claim 10 or 12, further comprising an interpolation unit (18) adapted to interpolate between pixel values of said visual content.

15. A computer-readable storage medium (20, 21) on which there is stored a computer program product adapted to, when executed in a processor unit, perform a method according to any one of claims 1-9.
